# EUROPÄISCHE PATENTANMELDUNG

(11) **EP 4 696 127 A1**
(43) Veröffentlichungstag der Anmeldung: **18.02.2026**
(21) Anmeldenummer: 25187285.9
(22) Anmeldetag: 03.07.2025
(51) Int. Cl.: A01D 41/127

(54) **LANDWIRTSCHAFTLICHE ARBEITSMASCHINE MIT FAHRERASSISTENZSYSTEM**

(30) Priorität: 13.08.2024 DE 102024123032
(71) Anmelder: CLAAS Selbstfahrende Erntemaschinen GmbH, 33428 Harsewinkel (DE)
(72) Erfinder: Kösters, Tarek, 50735 Köln (DE); Wilken, Andreas, 49143 Bissendorf (DE); Bormann, Bastian, 33334 Gütersloh (DE); Domnik, Matthias, 59302 Oelde (DE); Thiesmann, Waldemar, 49080 Osnabrück (DE); Vöcking, Henner, 33397 Rietberg (DE); Nelles, Oliver, 57250 Netphen-Herzhausen (DE)
(74) Vertreter: CLAAS Gruppe

(57) **Zusammenfassung**

Die Erfindung betrifft eine landwirtschaftliche Arbeitsmaschine (1) ein Fahrerassistenzsystem (45) umfassend, welches vorgesehen und eingerichtet ist Arbeitsparameter (44, 50a..i) und Qualitätsparameter (49,49a) der landwirtschaftlichen Arbeitsmaschine (1) automatisiert zu optimieren und einzustellen, wobei dem Fahrerassistenzsystem (45) ein Kennlinienfelder (48) umfassendes Prozessmodell (47) zugeordnet ist, sodass ein vom Fahrerassistenzsystem (45) umzusetzendes Optimierungsverfahren (56) als Kennfeldsteuerung (57) ausgebildet ist und das Optimierungsverfahren (56) als Stellgröße (51) optimierte Arbeitsparameter (44, 50a..i) generiert und das Fahrerassistenzsystem (45) in Abhängigkeit der optimierten Arbeitsparameter (44, 50a..i) die Qualitätsparameter (49,49a) der landwirtschaftlichen Arbeitsmaschine (1) ermittelt, wobei das Prozessmodell (47) ein Prozessgrundmodell (58) und einen diesem zugeordneten affinen Output Layer (59) umfasst, wobei das Prozessgrundmodell (58) und der affine Output Layer (59) Teilmodelle (60) des Prozessmodells (47) bilden und das Prozessgrundmodell (58) eingerichtet und ausgebildet ist Zusammenhänge einer Vielzahl von Prozessparametern (61) in Kennfeldern zur Generierung eines optimierten Qualitätsparameters (49,49a ) abzubilden und der affine Output Layer (59) ausgebildet und eingerichtet ist den jeweiligen Qualitätsparameter (49,49a ) in Abhängigkeit von zwei Prozessparametern (61) zu definieren.

## Beschreibung

Die Erfindung betrifft eine landwirtschaftliche Arbeitsmaschine ein Fahrerassistenzsystem umfassend nach dem Oberbegriff des Anspruchs 1.

Fahrerassistenzsysteme, welche die Arbeitsweise von landwirtschaftlichen Arbeitsmaschinen, insbesondere Erntemaschinen, optimieren und dabei den Bediener der landwirtschaftlichen Arbeitsmaschine weitgehend von Überwachungs- und Einstellaufgaben entlasten sind im Stand der Technik bereits umfassend beschrieben. Aus der DE 10 2010 017 687 A1 ist ein Fahrerassistenzsystem bekannt geworden, welches optimierte Einstellparameter der Arbeitsorgane einer landwirtschaftlichen Erntemaschine kennfeldbasiert ermittelt. Das hier offenbarte Verfahren nähert sich in einem iterativen Prozess optimierten Arbeitsparametern an. Derartige Systeme sind gut geeignet bei mehr oder weniger homogenen Erntebedingungen schnell optimierte Arbeitsparameter der Erntemaschine zu ermitteln. Bei sich schnell ändernden Erntebedingungen haben derartige Verfahren den Nachteil, dass Aufgrund der Trägheit des Optimierungsverfahrens ein bestimmter Einschwingprozess durchlaufen werden muss, bis die Erntemaschine wieder in einem optimierten Arbeitspunkt arbeitet.

Im Stand der Technik wurde auch schon erkannt, dass die Qualität des genutzten Kennfeldes maßgeblichen Einfluss auf das jeweilige Optimierungsergebnis hat. So wurde beispielsweise in der EP 2 687 922 A2 vorgeschlagen, bestimmte außerhalb des aktuellen Arbeitsbereichs liegende Arbeitspunkte des Kennfeldes gezielt anzufahren, um das Kennfeld in einem großen Bereich des Gesamtkennfeldes aktualisiert zu halten. Dies hat insbesondere den Effekt, dass die das Kennfeld bestimmenden mathematischen Zusammenhänge so angepasst werden, dass das Ermitteln optimierter Arbeitsparameter beschleunigt wird. Nachteilig ist bei derartigen Verfahren jedoch der zusätzliche Aufwand für die gezielte Ansteuerung nicht im gegenwärtigen Arbeitsfeld liegender Arbeitspunkte.

Um ein zur Optimierung von Arbeitsparametern einer landwirtschaftlichen Arbeitsmaschine, insbesondere Mähdrescher, genutztes Kennfeld zu befähigen schnell optimierte Arbeitsparameter zu ermitteln ist es gemäß EP 4 154 699 A1 aus dem Stand der Technik auch bekannt einem Kennfeld eine sogenannte Steuerkennlinie zuzuordnen, die über einen großen Bereich des Kennfeldes die jeweils optimalen Arbeitspunkte zusammenfasst und das Assistenzsystem den Prozess der Parameteroptimierung entlang dieser Optimal-Kennlinie steuert. Dies hat insbesondere den Vorteil, dass mittels dieser kennfeldbasierten Optimierung schneller die jeweils optimalen Arbeitspunkte erreicht werden. Nachteil bleibt hier, dass auf abrupte Änderungen in den Erntebedingung mit einer verbleibenden Trägheit reagiert wird, da das Optimierungssystem zunächst den an der Steuerkennlinie ausgerichteten neuen optimalen Arbeitspunkt ansteuern muss.

Weiter ist aus der DE 10 2023 122 014 ein Optimierungsverfahren bekannt geworden, welches eine Optimierung von Arbeitsparametern schnell an sich ändernde Prozessbedingungen, etwa sich abrupt ändernde Erntebedingungen, anpassen kann. Um dies zu erreichen, wird in DE 10 2023 122 014 vorgeschlagen, dass hinterlegte Prozessmodell als dynamisches nichtlineares Prozessmodell auszubilden, welches einen statischen Prozessmodellanteil und einen dynamischen Prozessmodellanteil umfasst, sodass die Kennfeldregelung einerseits schnell, d.h. dynamisch auf sich ändernde Prozessbedingungen reagieren kann und zum anderen das Prozessmodell selbst schrittweise an diese dynamischen Änderungen der Prozessbedingungen angepasst wird. Ein derartiges System ist sehr gut geeignet, schnell auf dynamische Änderungen der Prozessbedingungen zu reagieren. Nachteilig ist bei einem derartigen Verfahren, dass stets das gesamte hinterlegte Kennfeld nachgeführt wird, was zu langen sogenannten Haltezeiten führt, bis die Anpassung des Prozessmodels abgeschlossen ist. Zudem wird bei derartigen Verfahren ein sich wiederholendes ähnliches Prozessverhalten nicht erkannt.

Es ist deshalb Aufgabe der Erfindung die beschriebenen Nachteile des Standes der Technik zu vermeiden und insbesondere ein Fahrerassistenzsystem zu schaffen, welches sich schnell an die realen Erntebedingungen anpasst und insbesondere schnell auf abrupte Änderungen der Erntebedingungen reagiert und sich wiederholendes ähnliches Prozessverhalten erkennt.

Diese Aufgabe wird erfindungsgemäß durch eine landwirtschaftliche Arbeitsmaschine mit den kennzeichnenden Merkmalen des Anspruchs 1 gelöst.

Indem landwirtschaftliche Arbeitsmaschine ein Fahrerassistenzsystem umfasst, welches vorgesehen und eingerichtet ist Arbeitsparameter und Qualitätsparameter der landwirtschaftlichen Arbeitsmaschine automatisiert zu optimieren und einzustellen, wobei dem Fahrerassistenzsystem ein Kennlinienfelder umfassendes Prozessmodell zugeordnet ist, sodass ein vom Fahrerassistenzsystem umzusetzendes Optimierungsverfahren als Kennfeldsteuerung ausgebildet ist und das Optimierungsverfahren als Stellgröße optimierte Arbeitsparameter generiert und das Fahrerassistenzsystem in Abhängigkeit der optimierten Arbeitsparameter die Qualitätsparameter der landwirtschaftlichen Arbeitsmaschine ermittelt und das Prozessmodell ein Prozessgrundmodell und einen diesem zugeordneten affinen Output Layer umfasst, wobei das Prozessgrundmodell und der affine Output Layer Teilmodelle des Prozessmodells bilden und das Prozessgrundmodell eingerichtet und ausgebildet ist Zusammenhänge einer Vielzahl von Prozessparametern in Kennfeldern zur Generierung eines optimierten Qualitätsparameters abzubilden und der affine Output Layer ausgebildet und eingerichtet ist den jeweiligen Qualitätsparameter in Abhängigkeit von zwei Prozessparametern zu definieren wird sichergestellt, dass das Fahrerassistenzsystem sich schnell an die realen Erntebedingungen anpasst und insbesondere schnell auf abrupte Änderungen der Erntebedingungen reagieren kann. Bei geringer Anzahl verfügbarer Datenpunkte ist es schwer das Prozessgrundmodell robust zu adaptieren, sodass eine längere Zeit benötigt wird, bis das Prozessgrundmodell den Prozess, die Arbeitsweise der landwirtschaftlichen Arbeitsmaschine, unter den aktuellen Bedingungen beschreiben kann. Mit dem affinen Output Layer wird die Möglichkeit geschaffen, auch bei geringer Anzahl verfügbarer Datenpunkte das Prozessmodell robust zu adaptieren. Mit dem affinen Output Layer wird so die Möglichkeit geschaffen, dass das Prozessmodell den Prozess schneller gut beschreibt, sodass auch bei wenig verfügbaren Datenpunkten ein gutes Optimierungsergebnis erzielt wird. Liegen ausreichend Datenpunkte vor, wie dies in der Regel im laufenden Ernteprozess der Fall ist, kann dann ein Prozessmodel zur Optimierung genutzt werden, welches deutlich mehr Datenpunkte verarbeitet, hier das Prozessgrundmodell, und letztlich aufgrund der berücksichtigten komplexeren Zusammenhänge bessere Optimierungsergebnis erzielt.

In einer vorteilhaften Ausgestaltung der Erfindung sind das Prozessgrundmodell und der affine Output Layer unabhängig voneinander aktivierbar und die Aktivierung eine Anpassung der in dem jeweiligen Teilmodell hinterlegten Kennlinienfelder bewirkt, sodass gezielt in Abhängigkeit verfügbarer Datenpunkte/Informationen eine qualitativ hochwertige Optimierung der Arbeitsweise der landwirtschaftlichen Arbeitsmaschine erreicht wird.

In vorteilhafter Weiterbildung der Erfindung ist vorgesehen, dass die Adaption des Prozessmodells und seiner Teilmodelle Adaptionsphasen umfasst, wobei die Aktivierung der jeweiligen Adaptionsphase in Abhängigkeit der verfügbaren Prozessinformationen erfolgt.

Auf diese Weise wird sichergestellt, dass das Assistenzsystem in Abhängigkeit von den verfügbaren Prozessinformationen ein geeignetes Prozessmodell für die Optimierung der Arbeitsweise der landwirtschaftlichen Arbeitsmaschine auswählen kann.

In diesem Zusammenhang ist es von Vorteil, wenn eine erste Adaptionsphase als Initialisierungsphase ausgebildet und eingerichtet ist, wobei in der Initialisierungsphase die Adaption des Prozessmodells auf die Adaption des Teilmodells affiner Output Layer beschränkt ist, sodass beispielsweise beim Hineinfahren in einen Erntegutbestand mit den wenigen verfügbaren Prozessinformationen ein hinreichend gutes Optimierungsergebnis erzielt wird. In vorteilhafter Weiterbildung der Erfindung ist eine zweite Adaptionsphase als Adaptionsphase ausgebildet und eingerichtet, wobei in der Adaptionsphase die Adaption des Prozessmodells auf die Adaption des Prozessgrundmodells beschränkt ist, sodass bei größerem Umfang an verfügbaren Prozessinformationen ein komplexeres Adaptionsverfahren gewählt wird, welches verbesserte Optimierungsergebnisse erzielt. In diesem Zusammenhang ist es auch von Vorteil, wenn eine dritte Adaptionsphase als Optimalphase ausgebildet und eingerichtet ist, wobei in der Optimalphase die Adaption des Prozessmodells auf die Adaption des Prozessgrundmodells beschränkt ist, wobei die Parametrisierung des Adaptionsverfahrens in der Optimalphase von der Parametrisierung des Adaptionsverfahrens in der Adaptionsphase abweicht, und wobei die Parametrisierung die Adaptionsgeschwindigkeit und die Regularisierungsstärke umfasst. Dies hat den Effekt, dass man bei einem homogener verlaufenden Prozess, wie dies in einem Ernteprozess mit homogener Erntegutstruktur und eingeschwungenem Kennfeld der Fall ist, zwar auf ein komplexe Zusammenhänge erfassendes Prozessmodel zugreift, wobei die Anpassung dieses komplexen Prozessmodells wegen der homogeneren Verhältnisse weniger umfangreich ist. Mithin stellt sich in der Optimalphase im Vergleich zur Adaptionsphase eine niedrigere Adaptionsgeschwindigkeit und eine geringere Regulierungsstärke ein.

In einer vorteilhaften Weiterbildung der Erfindung werden die Prozessinformationen von der Menge der verfügbaren Datenpunkte, den verfügbaren Umgebungsparametern und dem Adaptionszustand, welcher von der Datenverfügbarkeit, der Anregung des Prozesses durch die Arbeitsparameter, das Konvergenzverhalten des Adaptionsverfahrens und der Varianz der Schätzung bestimmter Prozessparameter im Teilmodell Prozessgrundmodell bestimmt wird, gebildet, wobei das Fahrerassistenzsystem in Abhängigkeit von diesen Prozessinformationen zwischen den Adaptionsphasen wechselt. Auf diese Weise werden umfangreiche Prozessinformationen berücksichtigt, welche einen qualitativ hochwertigen Optimierungsprozess sicherstellen.

In diesem Zusammenhang ist es von Vorteil, wenn das Fahrerassistenzsystem bei Erntebeginn in der Initialisierungsphase startet und in Abhängigkeit von der Menge der verfügbaren Datenpunkte, den verfügbaren Umgebungsparametern und dem Adaptionszustand, welche zusammen die Prozessinformationen bilden, in die Adaptionsphase umschaltet und bei Erreichen einer quasistationären Phase des Prozessgrundmodells in die Optimalphase umschaltet. Auf diese Weise wird sichergestellt, dass in Abhängigkeit von den verfügbaren Prozessinformationen stets diejenige Adaptionsphase gewählt wird, welche das bestmögliche Modell und damit letztlich das bestmögliche Optimierungsergebnis liefert. Indem der Adaptionszustand, wie zuvor beschrieben von der Datenverfügbarkeit und/oder der Anregung des Prozesses durch die Arbeitsparameter und/oder dem Konvergenzverhalten des Adaptionsverfahrens und/oder der Varianz der Schätzung bestimmter Prozessparameter im Teilmodell Prozessgrundmodell bestimmt wird, wird zudem sichergestellt, dass das Prozessmodell den Prozess so hinreichend genau abbildet, dass ein qualitativ hochwertiger Optimierungsprozess erreicht wird.

Die komplexen Zusammenhänge, welche bei der Optimierung der Arbeitsweise einer landwirtschaftlichen Arbeitsmaschine eine Rolle spielen wird in einer vorteilhaften Ausgestaltung der Erfindung dann erreicht, wenn das Prozessgrundmodell ein nichtlineares, dynamisches Prozessverhalten abbildet.

Damit auch bei wenigeren verfügbaren Prozessinformationen ein ausreichend gutes Optimierungsergebnis der Arbeitsweise der landwirtschaftlichen Arbeitsmaschine erreicht wird ist in einer weiteren vorteilhaften Ausgestaltung der Erfindung vorgesehen, dass das Teilmodell affiner Output Layer ein lineares Prozessverhalten in der Weise abbildet, dass das jeweilige Kennlinienfeld gestreckt oder gestaucht und/oder im Raum verschoben wird.

Eine besonders effiziente Optimierung der Arbeitsweise der landwirtschaftlichen Arbeitsmaschine ergibt sich in einer weiteren vorteilhaften Ausgestaltung dann, wenn die Qualitätsparameter einen oder mehrere der Qualitätsparameter "Ausdruschverlust", "Bruchkornanteil", "Abscheideverlust", "Reinigungsverlust", "Dreschwerksbelastung", "Kraftstoffverbrauch", "Überkehrkornanteil" und "Überkehrvolumen" umfassen.

In analoger Weise wird ein effizienter und hochwertiger Optimierungsprozess in einer weiteren vorteilhaften Ausgestaltung dann sichergestellt, wenn die Prozessparameter Arbeitsparameter der landwirtschaftlichen Arbeitsmaschine und/oder Umfeldparameter und/oder Erntegutparameter umfassen. In diesem Zusammenhang ist es von Vorteil, wenn die Arbeitsparameter der landwirtschaftlichen Arbeitsmaschine beispielsweise die Dreschtrommeldrehzahl, die Dreschkorbweite, die Fahrgeschwindigkeit, die Drehzahlen der Dresch- und Trennrotoren, die Position der sogenannten Verschließklappen, sofern die Dresch- und Trennrotoren über derartige Klappen verfügen, die Gebläsedrehzahl und die sogenannte Obersieb- und Untersiebweite sind. Eine vorteilhafte Weiterbildung ergibt sich auch denn, wenn die Arbeitsparameter der landwirtschaftlichen Arbeitsmaschine die Erntegutparameter Durchsatz, Strohfeuchte, Kornfeuchte sind.

Weitere vorteilhafte Ausgestaltungen sind Gegenstand weiterer Unteransprüche und werden nachfolgend anhand in mehreren Figuren dargestellter Ausführungsbeispiele beschrieben. Es zeigen:
- Figur 1: eine schematische Ansicht der landwirtschaftlichen Arbeitsmaschine mit erfindungsgemäßem Fahrerassistenzsystem
- Figur 2: Details der prozessmodell-basierten Optimierung von Arbeitsparametern der landwirtschaftlichen Arbeitsmaschine
- Figur 3: Details der erfindungsgemäßen prozessmodell-basierten Optimierung von Arbeitsparametern der landwirtschaftlichen Arbeitsmaschine

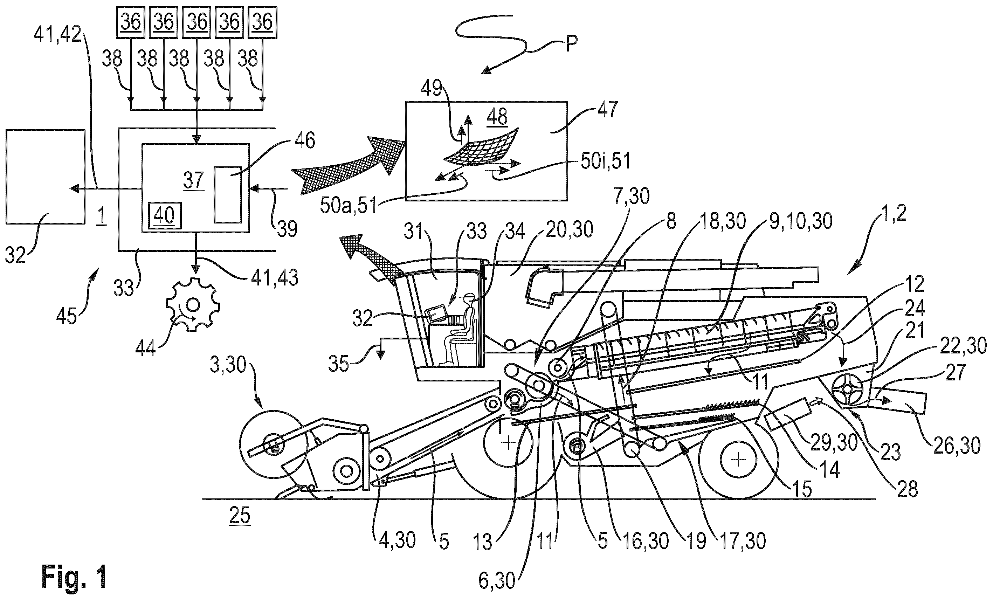

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Abscheiderotoranordnung 9 ausgeführte Trenneinrichtung 10 übergeben wird. Es liegt im Rahmen der Erfindung, dass die Trenneinrichtung 10 auch als an sich bekannter und deshalb nicht dargestellter Hordenschüttler ausgeführt sein kann. Auch liegt es im Rahmen der Erfindung, dass die Trenneinrichtung ein- oder zweirotorig ausgeführt sein kann oder die Dreschorgane 7 und die Trenneinrichtung 10 zu einer ein- oder zweirotorigen Axialflussdresch- und Trenneirichtung zusammengefasst sind. In der Trenneinrichtung 10 wird der Erntegutstrom 5 so gefördert, dass in dem Gutstrom 5 enthaltene freibewegliche Körner 11 im untenseitigen Bereich der Trenneinrichtung 10 abgeschieden werden. Sowohl die am Dreschkorb 6 als auch in der Trenneinrichtung 10 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom 18 wird schließlich mittels Elevatoren 19 an einen Korntank 20 übergeben.

Im rückwärtigen Bereich der Trenneinrichtung 10 ist dieser im dargestellten Ausführungsbeispiel eine von einem trichterförmigen Gehäuse 21 ummantelte, als Strohhäcksler 22 ausgeführte Zerkleinerungseinrichtung 23 zugeordnet. Dem Strohhäcksler 22 wird obenseitig das die Trenneinrichtung 10 im rückwärtigen Bereich verlassende Stroh 24 zugeführt. In nicht dargestellter Weise kann das Stroh 24 nach der Trenneinrichtung 10 auch so umgelenkt werden, dass es direkt auf dem Boden 25 in einem Schwad abgelegt wird. Im Austrittsbereich des Strohhäckslers 22 wird der aus dem zerkleinerten Stroh 24 bestehende Gutstrom und die in der Reinigungseinrichtung 17 abgeschiedenen Nichtkornbestandteile an eine Gutverteileinrichtung 26 übergeben, welche den Restmaterialstrom 27 so abgibt, dass es zu einer Breitverteilung des Restmaterialstroms 27 auf dem Boden 25 kommt. Im hier dargestellten Ausführungsbeispiel wird der in der Reinigungseinrichtung 17 abgeschiedenen Restmaterialstrom 28 mittels eines sogenannten Spreuverteilers 29 in den Strohhäcksler 22 abgegeben und dort letztlich als gemeinsamer Restmaterialstrom 27 mittels der Gutverteileinrichtung 26 aus dem Mähdrescher 12 gefördert. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18, der Korntank 20, der Strohhäcksler 22, die Gutverteileinrichtung 26 und der Spreuverteiler 29 als Arbeitsorgane 30 der landwirtschaftlichen Arbeitsmaschine 1 bezeichnet.

Weiter verfügt die landwirtschaftliche Arbeitsmaschine 1 über eine Fahrzeugkabine 31 in der zumindest eine mit einer Anzeigeeinheit 32 versehene Steuer- und Regeleinrichtung 33 angeordnet ist, mittels derer automatisch oder vom Bediener 34 der landwirtschaftlichen Arbeitsmaschine 1 initiiert eine Vielzahl von noch näher zu beschreibenden Prozessen P gesteuert werden können. Die Steuer- und Regeleinrichtung 33 kommuniziert über ein sogenanntes Bussystem 35 in an sich bekannter Weise mit einer Vielzahl von Sensorsystemen 36. Einzelheiten bezüglich der Struktur der Sensorsysteme 36 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 26 nicht nochmals beschrieben wird.

Weiter zeigt Fig. 1 eine schematische Darstellung der Anzeigeeinheit 32 der Steuer- und Regeleinrichtung 33 sowie die der Steuer- und Regeleinrichtung 33 zugeordnete und mit der Anzeigeeinheit 32 gekoppelte Recheneinheit 37. Die Recheneinheit 37 ist so beschaffen, dass sie neben den von den Sensorsystemen 36 generierten Informationen 38, externe Informationen 39 und in der Recheneinheit 37 selbst hinterlegte Informationen 40, wie etwa Expertenwissen, zu einer Vielzahl von Ausgangssignalen 41 verarbeiten kann. Die Ausgangssignale 41 sind dabei so beschaffen, dass sie zumindest Anzeigesteuersignale 42 und Arbeitsorgansteuersignale 43 umfassen, wobei erstere die Inhalte der Anzeigeeinheit 32 bestimmen und letztere die Änderung der unterschiedlichsten Arbeitsparameter 44 der Arbeitsorgane 30 der landwirtschaftlichen Arbeitsmaschine 1 bewirken, wobei Pfeil 44 symbolisch für die Dreschtrommeldrehzahl steht. Die Steuer- und Regeleinrichtung 33 mit der ihr zugeordneten Anzeigeeinheit 32 und der Recheneinheit 37 sind Bestandteil des erfindungsgemäßen, noch näher zu beschreibenden Fahrerassistenzsystems 45.

Dem Fahrerassistenzsystem 45 ist erfindungsgemäß ein Prozessoptimierungsmodul 46 zugeordnet, wobei das Prozessoptimierungsmodul 46 vorzugsweise Bestandteil der Recheneinheit 37 ist. Dem Prozessoptimierungsmodul 46 sind ein oder mehrere Prozessmodelle 47 zugeordnet, welche die noch näher zu beschreibenden, in der landwirtschaftlichen Arbeitsmaschine 1 ablaufenden Prozesse P beschreiben. Das einzige oder die mehreren Prozessmodelle 47 werden von Kennlinienfeldern 48 beschrieben, wobei in jedem Kennlinienfeld 48 der Zusammenhang zwischen Qualitätsparametern 49 und Arbeitsparametern 50a..i der landwirtschaftlichen Arbeitsmaschine 1 definiert sind.

Die von dem jeweiligen Prozessmodell 47 beschriebenen Prozesse P können beispielsweise der Ausdruschprozess, der Trennprozess oder der Reinigungsprozess des Erntegutes 5 sein, um hier nur einige Prozesse P beispielhaft zu nennen. Die Qualitätsparameter 49, 49a können beispielsweise die an sich bekannten und daher hier nicht näher beschriebenen Qualitätsparameter "Ausdruschverlust", "Bruchkornanteil", "Abscheideverlust", "Reinigungsverlust", "Dreschwerksbelastung", "Kraftstoffverbrauch", "Überkehrkornanteil" und das "Überkehrvolumen" sein. Die Arbeitsparameter 50a..i der landwirtschaftlichen Arbeitsmaschine umfassen einerseits auf den Erntegutstrom 5 bezogenen Parameter, wie etwa den Erntegutdurchsatz, die in der landwirtschaftlichen Arbeitsmaschine detektierte Schichthöhe des Erntegutstroms 5 und/oder die Feuchte des Erntegutstromes 5.

Andererseits umfassen die Arbeitsparameter 50a..i auf die Arbeitsorgane 30 der landwirtschaftlichen Arbeitsmaschine bezogenen Parameter wie die bereits genannte Dreschtrommeldrehzahl 44 und/oder die Drehzahl des der Reinigungseinrichtung 17 zugeordneten Gebläses 16, um hier nur beispielhaft zwei zu nennen. Das in Figur 1 dargestellte Beispiel für ein ein Prozessmodell 47 beschreibendes Kennfeld 48 könnte beispielsweise den Qualitätsparameter 49 "Abscheideverlust" in Abhängigkeit von den Arbeitsparametern Dreschtrommeldrehzahl 44, 50a und der auf den Erntegutstrom 5 bezogenen Schichthöhe 50i beschreiben.

Mit einer derartigen Struktur einer als Mähdrescher 2 ausgeführten landwirtschaftlichen Arbeitsmaschine 1, das beschriebene Fahrerassistenzsystem 45 umfassend, welches vorgesehen und eingerichtet ist, die Arbeitsparameter 44, 50a..i und die Qualitätsparameter 49 des Mähdreschers 2 automatisiert zu überwachen und einzustellen ergibt sich ein Fahrerassistenzsystem 45, welches den Bediener 34 des Mähdreschers 2 bei der Bedienung des Mähdreschers 2 unterstützt. Dies wird zunächst deshalb möglich, da dem Fahrerassistenzsystem 45 ein Kennlinienfelder 48 umfassendes Prozessmodell 47 zugeordnet ist und das Prozessmodell 47 den jeweiligen Qualitätsparameter 49 in Abhängigkeit von Stellgrößen 51, hier den Arbeitsparametern 50a..i, definiert und das Fahrerassistenzsystem 50 in noch näher zu beschreibender Weise eingerichtet ist, in Abhängigkeit von dem jeweiligen Prozessmodell 47 optimierte Arbeitsparameter 50a..i der landwirtschaftlichen Arbeitsmaschine 1 zu ermitteln.

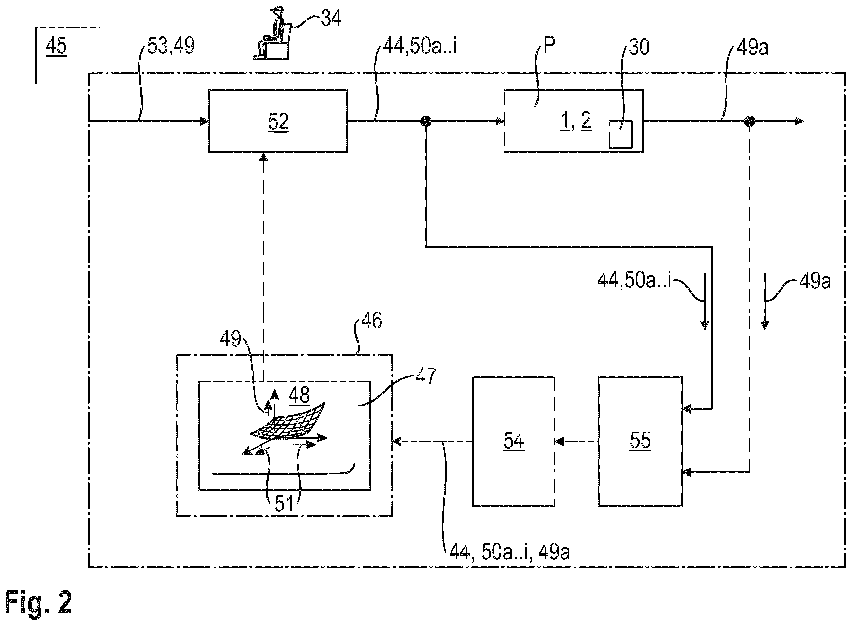

Zum besseren Verständnis der Erfindung werden in Fig. 2 zunächst generelle, aus dem Stand der Technik bekannte Aspekte des Fahrerassistenzsystems 45 im Detail beschrieben. Das Fahrerassistenzsystem 45 optimiert in einem Optimierungsschritt 52 die Arbeitsparameter 44, 50a..i der als Mähdrescher 2 ausgeführten landwirtschaftlichen Arbeitsmaschine 1. Die Optimierung der Arbeitsparameter 44, 55a..i hängt von einer den Optimierungsschritt 52 bestimmenden vorausgewählten Ernteprozessstrategie 53 ab, wobei die Ernteprozessstrategie 53 in der Regel vom Bediener 34 vorgegeben wird und im einfachsten Fall die zu erreichenden Qualitätsparameter 49, wie etwa maximal zulässige Kornverluste oder eine zu erreichende Reinheit der Körner 11, um nur beispielhaft zwei Qualitätskriterien 49 zu nennen, definiert. Die in dem Optimierungsschritt 52 ermittelten optimierten Arbeitsparameter 44, 55a..i werden sodann an den Prozess P übergeben und an den jeweiligen Arbeitsorganen 30 des Mähdreschers 2, etwa eine optimierte Drehzahl 44 einer den Dreschorganen 7 zugeordneten Dreschtrommel, automatisiert eingestellt. Sodann ermittelt das Fahrerassistenzsystem 45 die sich aufgrund einer Anpassung der Arbeitsparameter 44, 55a..i ergebenden Qualitätskriterien 49a.

Sowohl die optimierten Arbeitsparameter 44, 50a..i als auch die ermittelten Qualitätsparameter 49a werden in einem Modelladaptionsschritt 54 an das Prozessoptimierungsmodul 46 übermittelt, wobei in Abhängigkeit der übermittelten Parameter 44, 50a..i, 49a in an sich bekannter Weise das Prozessmodell 47 dann adaptiert wird, wenn das hinterlegte Prozessmodell 47 und das diesem zugeordnete Kennlinienfeld 48 den tatsächlichen Prozess P und damit die Abhängigkeiten zwischen dem jeweiligen Qualitätsparameter 49 und den jeweiligen Stellgrößen 51 nicht mehr hinreichend genau beschreibt. In der Regel ist dem Modelladaptionsschritt 54 ein Datenvorverarbeitungsschritt 55 vorgelagert.

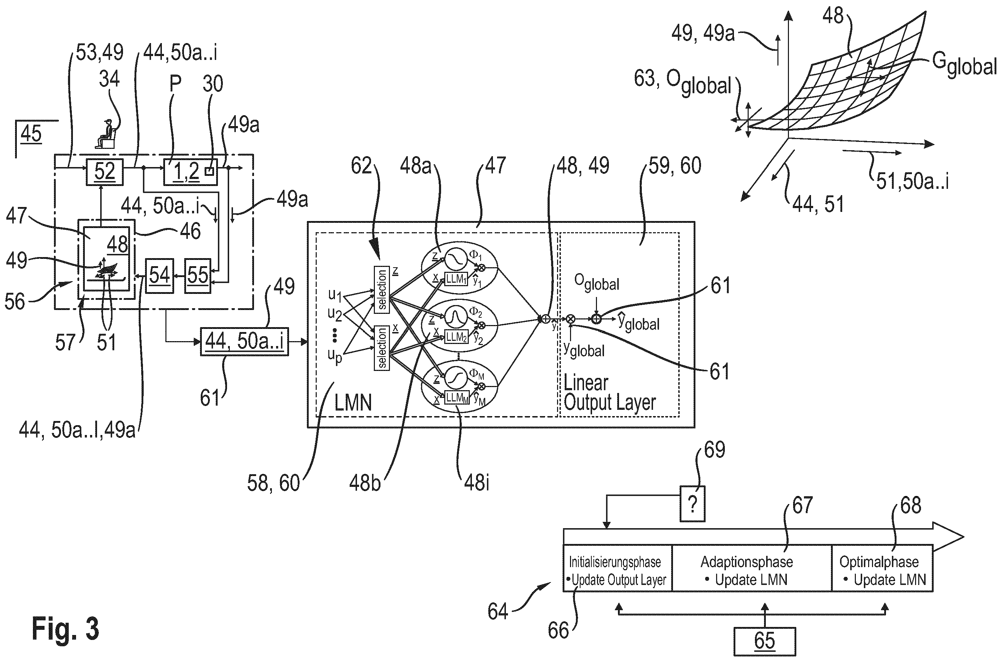

Fig. 3 zeigt nun Details des erfindungsgemäßen Fahrerassistenzsystems 45 mit dem ihm zugeordneten Prozessoptimierungsmodul 46, in welchem das Prozessmodell 47 und die dem Prozessmodel 47 zugeordneten Kennlinienfelder 48 hinterlegt sind, wobei das Prozessmodell 47 den Zusammenhang von Arbeitsparametern 50a..i eines Arbeitsorgans 30, den Stellgrößen 51, und den Qualitätsparametern 49 beschreibt, sodass das vom Fahrerassistenzsystem (45) umzusetzende und noch näher zu erläuternde Optimierungsverfahren (56) als Kennfeldsteuerung (57) ausgebildet ist.

Diese generelle Struktur befähigt das Fahrerassistenzsystem 45 die Arbeitsparameter 44, 50a..i und die Qualitätsparameter 49,49a der landwirtschaftlichen Arbeitsmaschine 1 automatisiert zu optimieren und einzustellen, wobei das Optimierungsverfahren 56 als Stellgröße 51 optimierte Arbeitsparameter 44, 50a..i generiert und das Fahrerassistenzsystem 45 in Abhängigkeit der optimierten Arbeitsparameter 44, 50a..i die Qualitätsparameter 49,49a der landwirtschaftlichen Arbeitsmaschine 1 ermittelt.

Erfindungsgemäß umfasst das Prozessmodell (47) ein Prozessgrundmodell (58) und einen diesem zugeordneten affinen Output Layer (59), wobei das Prozessgrundmodell (58) und der affine Output Layer (59) Teilmodelle (60) des Prozessmodells (47) bilden und das Prozessgrundmodell (47) eingerichtet und ausgebildet ist Zusammenhänge einer Vielzahl von Prozessparametern (61) in Kennfeldern (48) zur Generierung eines optimierten Qualitätsparameters (49, 49a) abzubilden und der affine Output Layer (59) ausgebildet und eingerichtet ist den jeweiligen Qualitätsparameter (49, 49a) in Abhängigkeit von zwei Prozessparametern (61) zu definieren.

Wie bereits beschrieben werden die auf die landwirtschaftliche Arbeitsmaschine 1 bezogenen Arbeitsparameter 44, etwa die Dreschtrommeldrehzahl, die auf das Erntegut bezogenen Arbeitsparameter 50a..i, etwa der Erntegutdurchsatz, und die Qualitätsparameter 49, 49a, etwa die Kornverluste an das dem Prozessoptimierungsmodul 46 zugeordnete Prozessmodel 47 übergeben, wobei die Übergabe an das dem Prozessmodel 47 zugeordnete Prozessgrundmodell 58 erfolgt. Das Prozessgrundmodell 58 kann als neuronales Netz 62, vorzugsweise als lokales Modellnetz ausgebildet sein. In dem neuronalen Netz 62 sind für verschiedenste Qualitätsparameter 49, 49a spezifische Kennlinienfelder 48a..i hinterlegt, mittels derer optimierte Qualitätsparameter 49, 49a und optimierte Kennlinienfelder 48a..i generiert werden, wobei vorzugsweise jedem Qualitätsparameter 49 ein Kennlinienfeld 48a..i zugeordnet ist. Die aus den Kennlinienfeldern 48 a..i abgeleiteten optimierten Arbeitspunkte werden erfindungsgemäß an das weiter Teilmodell 60, den affinen Output Layer 59, übergeben. Der affine Output Layer 59 definiert den in dem jeweiligen Kennfeld 48 hinterlegten Qualitätsparameter 49, 49a in Abhängigkeit von lediglich zwei Prozessparametern 61, wobei einer dieser Prozessparameter 61 einen Multiplikator Gglobal bildet, welcher das gesamte Kennfeld 48 streckt oder staucht, während der weitere Prozessparameter 61, Oglabal, eine Verschiebung 63 des jeweiligen Kennfeldes 48a..i im Raum bewirkt.

Erfindungsgemäß sind das Prozessgrundmodell 58 und der affine Output Layer 59 weiter so beschaffen, dass sie unabhängig voneinander aktivierbar sind und die Aktivierung eine Anpassung der in dem jeweiligen Teilmodell 61 hinterlegten Kennfelder 48 bewirkt.

Indem das Teilmodell 60 affiner Output Layer 59 ausschließlich von zwei Prozessparametern 61abhängt wird eine niedrige Komplexität realisiert. Im Kontrast dazu, ist das Prozessgrundmodell 58 durch die hohe Parameteranzahl sowie die abgebildete Dynamik in der Lage, deutlich komplexere Veränderungen des Prozessmodels 47 hervorzurufen. Dieser Komplexitätsunterschied und die Möglichkeit, beide Teilmodelle 61 unabhängig voneinander anzupassen, ermöglicht die gezielt auf die aktuelle Daten- und Prozesslage abgestimmte Adaption des gesamten Prozessmodels 47. Liegen nur wenige und geringfügig angeregte Daten vor (z.B. zu Beginn des Ernteprozesses auf einem neuen Feld) ist eine Anpassung des Prozessgrundmodells mit dem Risiko des sogenannten Overfittings verbunden, dem Risiko, dass Maschinenlernverfahren an bekannten Daten trainiert werden in der Anwendung jedoch unbekannte Daten berücksichtigt werden, was dazu führt, dass entweder das Optimierungsergebnis schlecht oder das jeweilige Modell die nicht gelernten Daten nicht hinreichend gut vorhersagen kann. Durch die geringe Parameteranzahl des affinen Output Layers 59 ist das Risiko von Overfitting durch die Anpassung dieser Prozessparameter 61 nicht vorhanden. Vielmehr ermöglicht das Anpassen dieser Prozessparameter 61 schnell und robust mit wenigen und nur bedingt angeregten Prozessdaten das Prozessmodels 47 zu adaptieren. Die Auswirkungen auf das Modellverhalten sind allerdings durch die geringe Komplexität der Teilmodels 61 affiner Output Layer 59 begrenzt. Lokal unterschiedliche Effekte oder sich veränderndes dynamisches Verhalten lassen sich nicht verändern. Ausschließlich der Modellausgang kann mit der Adaption des affinen Output Layers 59 verändert werden, um den aktuell aufgenommen Daten zu entsprechen.

Mit der Adaption des Prozessgrundmodells 58 lässt sich dagegen gezielt auf feine Abweichungen zwischen dem aktuellen Prozessmodell 47 und dem im Feld zu beobachtenden Verhalten reagieren. Die Adaption des Prozessgrundmodells 58 ermöglicht dabei sowohl das nichtlineare als auch das dynamische Prozessverhalten zu adaptieren. Durch die Modellform des Prozessgrundmodells 58 ist außerdem die Möglichkeit geschaffen, in unterschiedlichen lokalen Bereichen des Prozessgrundmodells 58 gezielt auf die vorherrschende Prozessanregung zu reagieren. Das heißt wenn nur am aktuellen Arbeitspunkt des Mähdreschers eine gute Prozessanregung vorliegt, kann dieser Teil des Prozessgrundmodells 58 adaptiert werden. Andere Bereiche des Prozessgrundmodells 58 sind davon nicht betroffen.

Vor dem Hintergrund, dass die Qualität der Adaption, die Optimierung, des Prozessmodells 47, seiner Teilmodelle 60 und der angewendeten Kennlinienfelder 48 maßgeblich von der Menge an verfügbaren, noch näher zu erläuternden Prozessinformationen 65 abhängt umfasst die Adaption des Prozessmodells 47 und seiner Teilmodelle 60 Adaptionsphasen 64, wobei die Aktivierung der jeweiligen Adaptionsphase 64 in noch näher zu erläuternder Weise in Abhängigkeit der verfügbaren Prozessinformationen 65 erfolgt. In diesem Zusammenhang ist eine erste Adaptionsphase 64 als Initialisierungsphase 66 ausgebildet und eingerichtet, wobei in der Initialisierungsphase 66 die Adaption des Prozessmodells 47 auf die Adaption des Teilmodells 60 affiner Output Layer 59 beschränkt ist. Eine zweite Adaptionsphase 64 ist als sogenannte Adaptionsphase 67 ausgebildet und eingerichtet, wobei in der Adaptionsphase 67 die Adaption des Prozessmodells 47 auf die Adaption des Prozessgrundmodells 58 beschränkt ist. Eine dritte Adaptionsphase 64 ist als Optimalphase 68 ausgebildet und eingerichtet, wobei in der Optimalphase 68 die Adaption des Prozessmodells 47 auf die Adaption des Prozessgrundmodells 58 beschränkt ist und die Parametrisierung des Prozessgrundmodells 58 in der Optimalphase 68 von der Parametrisierung des Prozessgrundmodells 58 in der Adaptionsphase 67 in noch näher zu beschreibender Weise abweicht, wobei die Parametrisierung die Adaptionsgeschwindigkeit und die Regularisierungsstärke umfasst.

Indem das Prozessmodel 47 in Adaptionsphasen 64 betrieben werden kann, wird eine situationsabhängige Adaption des Prozessmodells 47 möglich. Die Situationserkennung kann dabei auf Basis verschiedener Quellen durchgeführt werden. Zum einen können die adaptierten Teilmodelle 60 und die ihnen zugeordneten Kennlinienfelder 48 und der Prädiktionsfehler als Kriterium herangezogen werden, um den Gütegrad des gesamten Prozessmodells 47 und seiner Teilmodelle 60 zu bestimmen. Des Weiteren lassen sich zur Verfügung stehende Umgebungsparameter, z.B. Fruchtart, Fruchtartwechsel, Wetterumschwung, Bodenverhältnisse, pflanzenbauliche Unterschiede bezüglich der Fruchtart nutzen, um die aktuelle Erntesituation zu spezifizieren. Mit der Information über die aktuelle Situation lässt sich dann eine passende Parametrierung der Modelladaption vornehmen. Dabei ist sowohl das Umschalten zwischen vorab bestimmten Parametersätzen als auch das kontinuierliche Anpassen der Parameter auf Basis der Situation möglich. Auf diese Weise wird es insgesamt möglich, dass das Fahrerassistenzsystem in Abhängigkeit von der Menge der verfügbaren Datenpunkte, den verfügbaren Umgebungsparametern und dem Adaptionszustand, welcher von der Datenverfügbarkeit, der Anregung des Prozesses durch die Arbeitsparameter, dem Konvergenzverhalten des Adaptionsverfahrens und der Varianz der Schätzung bestimmter Prozessparameter im Teilmodell Prozessgrundmodell bestimmt wird, zwischen den Adaptionsphasen 64 wechselt.

In jeder der beschriebenen Adaptionsphasen 64 werden unterschiedliche Adaptionsalgorithmen und Parametrisierungen der Adaption des Prozessmodells 47 und seiner Teilmodelle 60 eingesetzt. In der Initialisierungsphase 66 ist eine robuste Adaption aufgrund der geringen Datenmenge nicht möglich. Um trotzdem die schnelle Adaption des gesamten Prozessmodells 47 zu ermöglichen, wird in der Initialisierungsphase 66 die Adaption des affinen Output Layers 59 verwendet. Mit Erreichen der Adaptionsphase 67, die durch das Konvergieren der Parameter des affinen Output Layers 59 gekennzeichnet ist, wird die Adaption auf das Prozessgrundmodell 58 umgeschaltet. Die Feinheiten des Prozessverhaltens lassen sich nun durch die Adaption des Prozessgrundmodells 58 erlernen. Mit Erreichen der Optimalphase 68, charakterisiert durch ein ausreichend genaues Prozessmodels 47, verbleibt die Adaption bei den Parametern des Prozessgrundmodells 58. Der nun gering zu erwartende Modellfehler hat zur Folge, dass nur noch kleine Anpassungen am Prozessgrundmodells 58 und damit letztlich am Prozessmodel 47 durch die Adaption vorgenommen werden.

Mit Blick auf die verfügbaren Prozessinformationen 65 startet das Fahrerassistenzsystem 45 bei Erntebeginn in der Initialisierungsphase 66 und in Abhängigkeit von der Menge der verfügbaren Datenpunkte, den verfügbaren Umgebungsparametern und dem Adaptionszustand, bestimmt durch die Datenverfügbarkeit, die Anregung des Prozesses durch die Arbeitsparameter, das Konvergenzverhalten des Adaptionsverfahrens und die Varianz der Schätzung bestimmter Prozessparameter im Teilmodell Prozessgrundmodell, wird in die Adaptionsphase 67 umgeschaltet. Bei Erreichen einer quasistationären Phase des Prozessgrundmodells 58 wird sodann in die Optimalphase 68 umgeschaltet. Erst bei der Detektion eines erneut großen Modellfehlers 69 (Wetterumschwung, Feldwechsel, Fruchtartwechsel...) wird die Modelladaption erneut in die Initialisierungsphase 66 versetzt und das Verfahren erneut durchlaufen.

Wie bereits beschrieben bildet das komplexer Prozessgrundmodell 58 ein nichtlineares, dynamisches Prozessverhalten ab, wohingegen das Teilmodell 60 affiner Output Layer 59 ein lineares Prozessverhalten in der Weise abbildet, dass das jeweilige Kennlinienfeld 48 gestreckt oder gestaucht und/oder im Raum verschoben wird.

In an sich bekannter Weise können die Qualitätsparameter 49, 49a den "Ausdruschverlust", den "Bruchkornanteil", den "Abscheideverlust", den "Reinigungsverlust", die "Dreschwerksbelastung", den "Kraftstoffverbrauch", den "Überkehrkornanteil" und das "Überkehrvolumen" umfassen.

Die Prozessparameter 61 können in an sich bekannter Weise die Arbeitsparameter 44, 50a..i der landwirtschaftlichen Arbeitsmaschine und/oder Umfeldparameter und/oder Erntegutparameter umfassen.

Weiter können in an sich bekannter Weise die Arbeitsparameter 44, 50a..i der landwirtschaftlichen Arbeitsmaschine die Dreschtrommeldrehzahl, die Korbweite, etc. sein. In ebenfalls an sich bekannter Weise können die Arbeitsparameter 44, 50a..i der landwirtschaftlichen Arbeitsmaschine auch die Erntegutparameter Durchsatz, Strohfeuchte, Kornfeuchte sein.

**Bezugszeichenliste:**

| | | | |
|---|---|---|---|
| 1 | Landwirtschaftliche Arbeitsmaschine | 34 | Bediener |
| 2 | Mähdrescher | 35 | Bussystem |
| 3 | Getreideschneidwerk | 36 | Sensorsystem |
| 4 | Schrägförderer | 37 | Recheneinheit |
| 5 | Erntegutstrom | 38 | Interne Information |
| 6 | Dreschkorb | 39 | Externe Information |
| 7 | Dreschorgan | 40 | Information |
| 8 | Umlenktrommel | 41 | Ausgangssignal |
| 9 | Abscheiderotoranordnung | 42 | Anzeigesignal |
| 10 | Trenneinrichtung | 43 | Arbeitsorgansignal |
| 11 | Körner | 44 | Arbeitsparameter |
| 12 | Rücklaufboden | 45 | Fahrerassistenzsystem |
| 13 | Zuführboden | 46 | Prozessoptimierungsmodul |
| 14 | Siebebene | 47 | Prozessmodell |
| 15 | Siebebene | 48 | Kennlinienfeld |
| 16 | Gebläse | 49,49a | Qualitätsparameter |
| 17 | Reinigungseinrichtung | 50a..i | Arbeitsparameter |
| 18 | Körnerstrom | 51 | Stellgröße |
| 19 | Elevator | 51' | optimierte Stellgröße |
| 20 | Korntank | 52 | Optimierungsschritt |
| 21 | trichterförmiges Gehäuse | 53 | Ernteprozessstrategie |
| 22 | Strohhäcksler | 54 | Modelladaptionsschritt |
| 23 | Zerkleinerungseinrichtung | 55 | Datenvorverarbeitungsschritt |
| 24 | Stroh | 56 | Optimierungsverfahren |
| 25 | Boden | 57 | Kennfeldsteuerung |
| 26 | Gutverteileinrichtung | 58 | Prozessgrundmodell |
| 27 | Restmaterialstrom | 59 | Affiner Output Layer |
| 28 | Restmaterialstrom | 60 | Teilmodell |
| 29 | Spreuverteiler | 61 | Prozessparameter |
| 30 | Arbeitsorgan | 62 | Neuronales netz |
| 31 | Fahrzeugkabine | 63 | Verschiebung |
| 32 | Anzeigeeinheit | 64 | Adaptionsphase |
| 33 | Steuer- und Regeleinrichtung | | |
| 65 | Prozessinformation | | |
| 66 | Initialisierungsphase | | |
| 67 | Adaptionsphase | | |
| 68 | Optimalphase | | |
| 69 | Modellfehler | | |
| 70 | | | |
| 71 | | | |
| Gglobal | Prozessparameter | | |
| Oglobal | Prozessparameter | | |

## Patentansprüche

1. Landwirtschaftliche Arbeitsmaschine (1) ein Fahrerassistenzsystem (45) umfassend, welches vorgesehen und eingerichtet ist Arbeitsparameter (44, 50a..i) und Qualitätsparameter (49,49a) der landwirtschaftlichen Arbeitsmaschine (1) automatisiert zu optimieren und einzustellen, wobei dem Fahrerassistenzsystem (45) ein Kennlinienfelder (48) umfassendes Prozessmodell (47) zugeordnet ist, sodass ein vom Fahrerassistenzsystem (45) umzusetzendes Optimierungsverfahren (56) als Kennfeldsteuerung (57) ausgebildet ist und das Optimierungsverfahren (56) als Stellgröße (51) optimierte Arbeitsparameter (44, 50a..i) generiert und das Fahrerassistenzsystem (45) in Abhängigkeit der optimierten Arbeitsparameter (44, 50a..i) die Qualitätsparameter (49,49a) der landwirtschaftlichen Arbeitsmaschine (1) ermittelt
**dadurch gekennzeichnet, dass**
das Prozessmodell (47) ein Prozessgrundmodell (58) und einen diesem zugeordneten affinen Output Layer (59) umfasst, wobei das Prozessgrundmodell (58) und der affine Output Layer (59) Teilmodelle (60) des Prozessmodells (47) bilden und das Prozessgrundmodell (58) eingerichtet und ausgebildet ist Zusammenhänge einer Vielzahl von Prozessparametern (61) in Kennfeldern zur Generierung eines optimierten Qualitätsparameters (49,49a ) abzubilden und der affine Output Layer (59) ausgebildet und eingerichtet ist den jeweiligen Qualitätsparameter (49,49a ) in Abhängigkeit von zwei Prozessparametern (61) zu definieren.

2. Landwirtschaftliche Arbeitsmaschine (1) ein Fahrerassistenzsystem (45) umfassend nach Anspruch 2,
**dadurch gekennzeichnet, dass**
das Prozessgrundmodell (58) und der affine Output Layer (59) unabhängig voneinander aktivierbar sind und die Aktivierung eine Anpassung der in dem jeweiligen Teilmodell (60) hinterlegten Kennlinienfelder bewirkt.

3. Landwirtschaftliche Arbeitsmaschine (1) ein Fahrerassistenzsystem (45) umfassend nach einem der vorhergehenden Ansprüche,
**dadurch gekennzeichnet, dass**
die Adaption des Prozessmodells und seiner Teilmodelle (60) Adaptionsphasen (64) umfasst, wobei die Aktivierung der jeweiligen Adaptionsphase (64) in Abhängigkeit der verfügbaren Prozessinformationen (65) erfolgt.

4. Landwirtschaftliche Arbeitsmaschine (1) ein Fahrerassistenzsystem (45) umfassend nach Anspruch 3,
**dadurch gekennzeichnet, dass**
eine erste Adaptionsphase (64) als Initialisierungsphase (66) ausgebildet und eingerichtet ist, wobei in der Initialisierungsphase (66) die Adaption des Prozessmodells (47) auf die Adaption des Teilmodells (60) affiner Output Layer (59) beschränkt ist.

5. Landwirtschaftliche Arbeitsmaschine (1) ein Fahrerassistenzsystem (45) umfassend nach Anspruch 3,
**dadurch gekennzeichnet, dass**
eine zweite Adaptionsphase (64) als Adaptionsphase (67) ausgebildet und eingerichtet ist, wobei in der Adaptionsphase (67) die Adaption des Prozessmodells (47) auf die Adaption des Prozessgrundmodells (58) beschränkt ist

6. Landwirtschaftliche Arbeitsmaschine (1) ein Fahrerassistenzsystem (45) umfassend nach Anspruch 3,
**dadurch gekennzeichnet, dass**
eine dritte Adaptionsphase (64) als Optimalphase (68) ausgebildet und eingerichtet ist, wobei in der Optimalphase (68) die Adaption des Prozessmodells (47) auf die Adaption des Prozessgrundmodells (58) beschränkt ist, wobei die Parametrisierung des Adaptionsverfahrens in der Optimalphase (68) von der Parametrisierung des Adaptionsverfahrens in der Adaptionsphase (67) abweicht.

7. Landwirtschaftliche Arbeitsmaschine (1) ein Fahrerassistenzsystem (45) umfassend nach einem der Ansprüche 4 bis 6,
**dadurch gekennzeichnet, dass**
das Fahrerassistenzsystem (45) in Abhängigkeit von der Menge der verfügbaren Datenpunkte, den verfügbaren Umgebungsparametern und dem Adaptionszustand zwischen den Adaptionsphasen (67) wechselt.

8. Landwirtschaftliche Arbeitsmaschine (1) ein Fahrerassistenzsystem (45) umfassend nach Anspruch 7, **dadurch gekennzeichnet, dass**
das Fahrerassistenzsystem (45) bei Erntebeginn in der Initialisierungsphase (66) startet und in Abhängigkeit von der Menge der verfügbaren Datenpunkte, den verfügbaren Umgebungsparametern und dem Adaptionszustand in die Adaptionsphase (67) umschaltet und bei Erreichen einer quasistationären Phase des Prozessgrundmodells (58) in die Optimalphase (68) umschaltet.

9. Landwirtschaftliche Arbeitsmaschine (1) ein Fahrerassistenzsystem (45) umfassend nach einem der vorhergehenden Ansprüche, **dadurch gekennzeichnet, dass** das Prozessgrundmodell (58) ein nichtlineares, dynamisches Prozessverhalten abbildet.

10. Landwirtschaftliche Arbeitsmaschine (1) ein Fahrerassistenzsystem (45) umfassend nach einem der vorhergehenden Ansprüche, **dadurch gekennzeichnet, dass** das Teilmodell (60) affiner Output Layer (59) ein lineares Prozessverhalten in der Weise abbildet, dass das jeweilige Kennlinienfeld gestreckt oder gestaucht und/oder im Raum verschoben wird.

11. Landwirtschaftliche Arbeitsmaschine (1) ein Fahrerassistenzsystem (45) umfassend nach einem der vorhergehenden Ansprüche, **dadurch gekennzeichnet, dass** der Qualitätsparameter (49, 49a) den "Ausdruschverlust", den "Bruchkornanteil", den "Abscheideverlust", den "Reinigungsverlust", die "Dreschwerksbelastung", den "Kraftstoffverbrauch", den "Überkehrkornanteil" und das "Überkehrvolumen" umfassen kann.

12. Landwirtschaftliche Arbeitsmaschine (1) ein Fahrerassistenzsystem (45) umfassend nach einem der vorhergehenden Ansprüche, **dadurch gekennzeichnet, dass** die Prozessparameter (61) Arbeitsparameter (44, 50a)..i der landwirtschaftlichen Arbeitsmaschine (1) und/oder Umfeldparameter und/oder Erntegutparameter umfassen können.

13. Landwirtschaftliche Arbeitsmaschine (1) ein Fahrerassistenzsystem (45) umfassend nach einem der vorhergehenden Ansprüche, **dadurch gekennzeichnet, dass** die Arbeitsparameter (44, 50 a..i) der landwirtschaftlichen Arbeitsmaschine (1) die Dreschtrommeldrehzahl, die Korbweite, etc. sein können.

14. Landwirtschaftliche Arbeitsmaschine (1) ein Fahrerassistenzsystem (45) umfassend nach einem der vorhergehenden Ansprüche, **dadurch gekennzeichnet, dass** die Arbeitsparameter (44, 50a..i) der landwirtschaftlichen Arbeitsmaschine die Erntegutparameter Durchsatz, Strohfeuchte, Kornfeuchte sein können.
